Europäisches Patentamt

(19) European Patent Office

Office européen des brevets

(11) Veröffentlichungsnummer: **0 198 116**
**A1**

# EUROPÄISCHE PATENTANMELDUNG

(21) Anmeldenummer: 85114574.8

(22) Anmeldetag: 16.11.85

(51) Int. Cl.⁴: **G 11 B 15/665**

(30) Priorität: 30.03.85 DE 3511848

(43) Veröffentlichungstag der Anmeldung: 22.10.86
Patentblatt 86/43

(84) Benannte Vertragsstaaten: **AT CH DE FR GB LI**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Schmidt, Erhard, Ing. grad., Wickenstrasse 46, D-8510 Fürth (DE)**

(54) Vorrichtung zur Führung eines Magnetbandes in einem Video-Magnetbandgerät.

(57) Es wird eine Vorrichtung zur Führung eines Magnetbandes (1) in einem Videogerät beschrieben, bei der die Bandführungselemente (4, 5, 6, 7) auf unterschiedlichen Trägern (8, 9, 10) angeordnet sind und die Träger (8, 9, 10) getrennt mit unterschiedlicher Drehzahl und Drehrichtung antreibbar sind.

# VORRICHTUNG ZUR FÜHRUNG EINES MAGNETBANDES
## IN EINEM VIDEO-MAGNETBANDGERÄT

## BESCHREIBUNG

Die Erfindung betrifft eine Vorrichtung entsprechend dem Oberbegriff des Anspruchs 1.

Es sind magnetische Aufzeichnungs- und/oder Wiedergabegeräte bekannt, die insbesondere als Video-Magnetbandgeräte mit Schrägspuraufzeichnung arbeiten und bei denen das Magnetband um eine rotierende Kopftrommel geführt wird. Zur Herstellung einer wenigstens teilweise Umschlingung der Kopftrommel mit einem Magnetband werden bewegliche Bandführungselemente verwendet. Das Magnetband wird hierbei aus einer Bandkassette über zwei Bandwickelspulen herausgezogen und um einen Teil der Kopftrommel gelegt. Hierzu sind bei bekannten Bandführungsvorrichtungen die Bandführungs-

0198116

elemente auf einem ringförmigen Träger angeordnet, der getrennt antreibbar um die Kopftrommel gelegt ist. Es ist auch eine Ausführung bekannt, bei der zwei ringförmige Träger verwendet werden, wobei ein Träger angetrieben und der zweite über eine Art Schlitzführung mit dem ersten Träger so verbunden ist, daß ein verzögertes Anlaufen des zweiten Trägers möglich ist. Eine zeitlich unterschiedliche Bewegung der Bandführungselemente ist insbesondere dann erforderlich, wenn das Magnetband in Form einer Schlaufe nur von einer Seite aus um die Kopftrommel gelegt werden soll, und die beiden Schlaufenabschnitte sich nicht berühren sollen. Bekannterweise wird bei einer derartigen Kopftrommelumschlingung von einer U-Umschlingung gesprochen. Nachteilig ist bei den bekannten Führungen eines Magnetbandes um die Kopftrommel, daß die auf einem Träger angeordneten Bandführungselemente keine beliebig zeitlich versetzte Steuerung der einzelnen Bandführungselemente erlauben, und daß insbesondere die einzelnen Bandführungselemente nicht mit unterschiedlichen Winkelgeschwindigkeiten antreibbar sind.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1 ist eine schematische Darstellung einer Vorrichtung zur Führung eines Magnetbandes über Bandführungselemente, wobei die Bandführungselemente auf drei verschiedenen ringförmigen Trägern angeordnet sind, und das Magnetband um die Kopftrommel geführt ist,

Fig. 2 ist eine Darstellung ähnlich der Fig. 1, jedoch zeigt sie das Magnetband noch vor dem Herausziehen aus der Kassette,

Fig. 3 ist eine schematische Darstellung eines Antriebs im Schnitt und zeigt die drei verschiedenen ringförmigen Bandführungsträger.

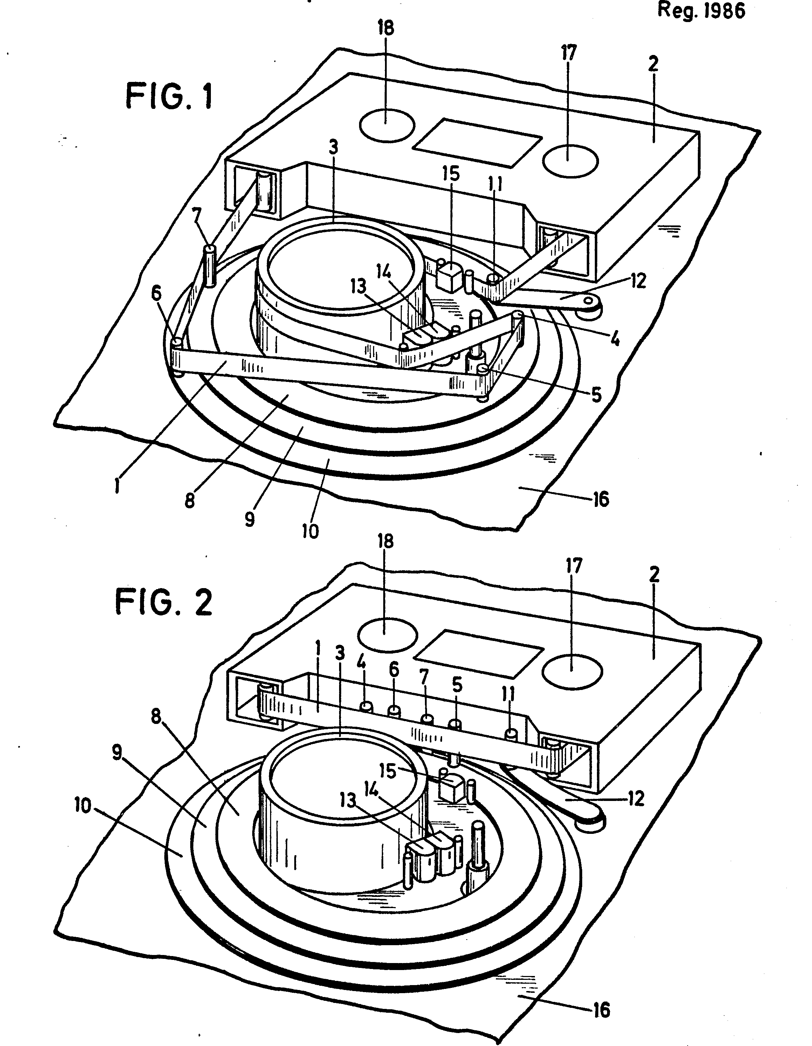

Aus der Figur 1 ist zu erkennen, wie ein Magnetband 1 aus einer Bandkassette 2 herausgezogen um eine Kopftrommel 3 eines nicht näher dargestellten Video-Magnetbandgerätes gelegt ist. Das Magnetband wird beim Herausziehen aus der Kassette 2 von mehreren Bandführungselementen, im wesentlichen von den Bandführungselementen 4, 5, 6 und 7 erfaßt und aus der Kassette gezogen. Die Bandführungselemente sind hierzu auf getrennt antreibbaren ringförmigen Trägern 8, 9 und 10 angeordnet. Nach der dargestellten Zeichnung ist zusätzlich noch ein nicht auf einem der Träger befestigter Bandführungsstift 11 vorhanden. Dieser Bandführungsstift ist auf einem getrennten schwenkbaren Hebel 12 angeordnet. Nahe der Kopftrommel befinden sich zwei feststehende Audioköpfe 13 und 14 und ein Löschkopf 15 mit ebenfalls dem Chassis 16 zugeordneten Bandführungsstiften. In der Kassette befinden sich bekannterweise zwei nebeneinander angeordnete Bandspulen 17, 18, die bekannterweise über getrennte Antriebsmittel antreibbar sind.

Die Figur 2 zeigt die Bandkassette 2 mit räumlich zugeordneter Kopftrommel 3, wobei sich das Magnetband 1 nach der Zeichnung noch in der Ausgangslage, d. h. in der Kassette befindet. Die Bandführungselemente 4, 5, 6, 7, die auf den ringförmigen Träger 8, 9, 10 angeordnet sind, befinden sich auf der Rückseite des Magnetbandes und können das Band bei Bewegung der ringförmigen Träger aus der Kassette herausziehen oder zurückführen. Der Bandführungsstift 11 befindet sich ebenfalls auf der Rückseite des Magnetbandes. Bei einer etwas veränderten Bandführungsgeometrie ist dieser Bandführungsstift nicht erforderlich.

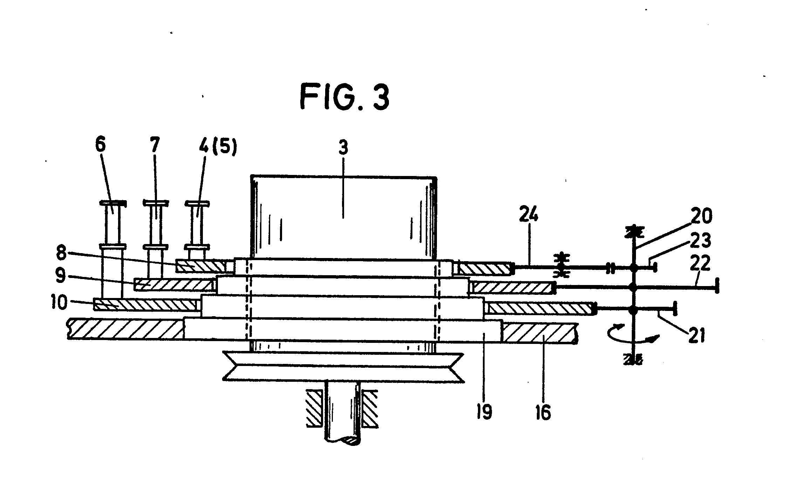

In der Figur 3 ist der Antrieb der einzelnen ringförmigen Träger 8, 9, 10 schematisch dargestellt. Die Träger sind übereinander angeordnet und tragen die ihnen zugeordneten Bandführungselemente 4, 5, 6, 7. Zur zeichnerischen Vereinfachung sind die Führungselemente nebeneinanderstehend dargestellt. Die Träger sind in einem am Chassis befestigten Stufenring 19 gelagert. Mittig zu den Trägern 8, 9, 10 befindet sich die mit einem eigenen Antrieb versehene Kopftrommel 3. Die Träger sind über Steuermotore, von denen je einer einem Träger zugeordnet ist, antreibbar, oder sie sind durch eine einzige Triebwelle über verschiedene Zahnräder 21, 22, 23 und bedarfsweise Zwischenräder 24 antreibbar. Die Übersetzungsverhältnisse zwischen den einzelnen ringförmigen Trägern 8, 9, 10 und der Triebwelle sind unterschiedlich. Der Antrieb kann jedoch auch so ausgebildet sein, daß zwei Träger in gleicher Drehrichtung antreibbar sind, während der dritte oder vierte Träger in gegenläufiger Richtung angetrieben wird. Es ist auch denkbar, daß ein oder zwei Träger während des Bandeinfädelvorganges die Drehrichtung ändern.

— 1 —

# VORRICHTUNG ZUR FÜHRUNG EINES MAGNETBANDES IN EINEM VIDEO-MAGNETBANDGERÄT

## PATENTANSPRÜCHE

1. Vorrichtung zur Führung eines Magnetbandes über Bandführungselemente, insbesondere in einem Video-Magnetbandgerät, das eine drehbare Kopftrommel mit zugeordneten Magnetköpfen aufweist, und das Magnetband aus einer Bandkassette herausgezogen in Schrägspurführung die Kopftrommel teilweise umschlingt, wobei die Bandführungselemente auf mindestens zwei die Kopftrommel umgebenden, ringförmigen Trägern angeordnet und um die Kopftrommel drehbar sind, dadurch gekennzeichnet, daß die ringförmigen Träger (8, 9, 10) einzeln gelagert und getrennt antreibbar sind, daß der Antrieb einzeln oder über eine gemeinsame Triebwelle (20) durch unterschiedliche Zahnräder und Zwischenräder erfolgt, daß die ringförmigen Träger mit unterschiedlichen Winkelgeschwindigkeiten antreibbar sind, daß in Abhängigkeit der jeweiligen Stellung der Bandführungselemente im Gerät die Ausgangs- und Endlage der Träger bestimmt ist.

2. Vorrichtung nach Anspruch 1, d a d u r c h g e k e n n z e i c h n e t , daß die ringförmigen Träger (8, 9, 10) unterschiedliche Außen- und/oder Innendurchmesser aufweisen.

3. Vorrichtung nach Anspruch 1 oder 2, d a - d u r c h g e k e n n z e i c h n e t , daß die ringförmigen Träger übereinander angeordnet sind.

4. Vorrichtung nach einem der bisherigen Ansprüche, d a d u r c h g e k e n n z e i c h n e t , daß jeder der ringförmigen Träger mindestens ein Bandführungselement aufweist.

5. Vorrichtung nach einem der bisherigen Ansprüche, d a d u r c h g e k e n n z e i c h n e t , daß die Bandführungsstifte bedarfsweise in unterschiedlicher Winkellage auf den Trägern angeordnet sind.

6. Vorrichtung nach einem der bisherigen Ansprüche, d a d u r c h g e k e n n z e i c h n e t , daß die ringförmigen Träger in gleicher oder unterschiedlicher Winkellage zueinander und/oder zur Kopftrommel angeordnet sind.

0198116

7. Vorrichtung nach einem der bisherigen Ansprüche, d a d u r c h   g e k e n n z e i c h n e t , daß die ringförmigen Träger gleichsinnig oder bedarfsweise gegensinnig antreibbar sind.

0198116
Reg. 1986

FIG. 1

FIG. 2

0198116
Reg. 1986

# FIG. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 012 788 (D.L. BLANDING) <br> * Spalte 5, Zeilen 1-60; Figuren 3-5 * | 1 | G 11 B 15/665 |
| A | | 3,4 | |
| | --- | | |
| A | FR-A-2 552 577 (SONY) <br> * Seite 12, Zeile 18 - Seite 13, Zeile 35; Figur 10 * | 1,3 | |
| | --- | | |
| A | DE-B-2 719 778 (MATSUSHITA) <br> * Spalte 6, Zeile 50 - Spalte 7, Zeile 40; Figuren 13, 14 * | 1 | |
| | --- | | |
| A | EP-A-0 057 921 (MATSUSHITA) <br> * Figur 23 * | 1 | |
| | ----- | | RECHERCHIERTE SACHGEBIETE (Int. Cl.4) <br><br> G 11 B 15/665 |

Der vorliegende Recherchenbericht wurde für alle Patentansprüche erstellt.

| Recherchenort <br> BERLIN | Abschlußdatum der Recherche <br> 04-07-1986 | Prüfer <br> ROGNONI M.G.L. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82